# EUROPÄISCHE PATENTSCHRIFT

(11) **EP 3 374 744 B1**
(45) Veröffentlichungstag und Bekanntmachung des Hinweises auf die Patenterteilung: **04.03.2020**
(21) Anmeldenummer: 16791627.9
(22) Anmeldetag: 09.11.2016
(51) Int. Cl.: G01L 9/00, G01L 19/00

(54) **KAPAZITIVER DRUCKSENSOR UND VERFAHREN ZU DESSEN HERSTELLUNG**
CAPACITIVE PRESSURE SENSOR AND METHOD FOR THE PRODUCTION THEREOF
CAPTEUR DE PRESSION CAPACITIF ET SON PROCÉDÉ DE FABRICATION

(30) Priorität: 09.11.2015 DE 102015119272
(43) Veröffentlichungstag der Anmeldung: 19.09.2018
(73) Patentinhaber: Endress+Hauser SE+Co. KG, 79689 Maulburg (DE)
(72) Erfinder: NOMMENSEN, Peter, 78054 Villingen-Schwenningen (DE); TEIPEN, Rafael, 10407 Berlin (DE); LEMKE, Benjamin, 12051 Berlin (DE); LOPATIN, Sergej, 79540 Lörrach (DE)
(74) Vertreter: Andres, Angelika Maria
(86) Internationale Anmeldenummer: PCT/EP2016/077074
(87) Internationale Veröffentlichungsnummer: WO 2017/081053

(56) Entgegenhaltungen:
- GB-A- 2 314 933
- US-A- 4 581 676
- US-A1- 2008 087 069

## Beschreibung

Die vorliegende Erfindung betrifft einen kapazitiven Drucksensor, mit einem Grundkörper, einer unter Einschluss einer Druckkammer mit dem Grundkörper verbundenen, mit einem zu messenden Druck beaufschlagbaren, elektrisch leitfähigen Messmembran und einer von der Messmembran beabstandeten, gegenüber der Messmembran elektrisch isolierten Elektrode, die zusammen mit der Messmembran einen Kondensator mit einer in Abhängigkeit von einer vom auf die Messmembran einwirkenden Druck abhängigen Durchbiegung der Messmembran veränderlichen Kapazität bildet.

Kapazitive Drucksensoren werden in der industriellen Messtechnik zur Messung von Drücken eingesetzt. Diese umfassen als Absolut-, Relativ- oder Differenzdrucksensoren ausgebildete als Halbleitersensoren oder Sensor-Chips bezeichnete Drucksensoren, die unter Verwendung von aus der Halbleitertechnologie bekannten Prozessen im Waferverbund hergestellt werden können.

Als Differenzdrucksensoren ausgebildete Drucksensoren weisen üblicherweise zwei Grundkörper auf, zwischen denen die Messmembran angeordnet ist. In jedem der beiden Grundkörper ist jeweils eine unter der Messmembran eingeschlossene Druckkammer vorgesehen. Im Messbetrieb wird die erste Seite der Messmembran über eine Ausnehmung in einem der Grundkörper mit dem ersten und die zweite Seite der Messmembran über eine Ausnehmung im zweiten Grundkörper mit dem zweiten Druck beaufschlagt.

Kapazitive Drucksensoren umfassen mindestens einen kapazitiven elektromechanischen Wandler, der eine vom auf die Messmembran einwirkenden Druck abhängige Auslenkung der Messmembran erfasst, und in ein den zu messenden Druck wiedergebendes elektrisches Signal umwandelt. Halbleitersensoren weisen hierzu regelmäßig eine leitfähige Messmembran auf, die zusammen mit einer im jeweiligen Grundkörper integrierten, elektrisch gegenüber der Messmembran isolierten, starren Elektrode einen Kondensator mit einer von der druckabhängigen Durchbiegung der Messmembran abhängigen Kapazität bildet.

Grundsätzlich wäre es möglich, Differenzdrucksensoren mit zwei einteiligen, zugleich als Elektrode dienenden leitfähigen Grundkörpern auszustatten, zwischen denen eine als Gegenelektrode dienende leitfähige Messmembran angeordnet ist. Hierzu ist zwischen der Messmembran und jedem der beiden als Elektrode dienenden Grundkörper jeweils eine isolierende Schicht vorzusehen, über die ein äußerer Rand der Messmembran unter Einschluss der Druckkammer mit dem äußeren Rand des jeweiligen Grundkörpers verbunden ist.

Vom Einsatz derartiger Differenzdrucksensoren wird in der DE 38 25 138 A1 abgeraten, da bei diesen Differenzdrucksensoren das Problem besteht, dass jeder der beiden durch die Messmembran und einen der beiden einteiligen Grundkörper gebildeten Kondensatoren aus einem inneren und einem diesen außenseitlich umschließenden äußeren Teilkondensator zusammen gesetzt ist. Der innere Teilkondensator befindet sich in einem Bereich des Differenzdrucksensors, in dem der zentrale Bereich der Messmembran die vom Differenzdruck abhängige Durchbiegung erfährt. Der äußere Teilkondensator befindet sich in einem Bereich des Differenzdrucksensors, in dem der äußere den zentralen Bereich allseitig umschießende Rand der Messmembran zwischen den isolierenden Schichten angeordnet ist.

Die Kapazität C1, C2 jedes der beiden Kondensatoren entspricht der Summe der Kapazitäten C1a, C1b bzw. C2a, C2b der beiden Teilkondensatoren, aus denen er besteht. Dabei weist jedoch nur die Kapazität C1a bzw. C2a des inneren Teilkondensators die messtechnisch zu erfassende Differenzdruckabhängigkeit auf. Das hat zur Folge, dass die messtechnisch zu erfassende von der differenzdruckabhängigen Durchbiegung des inneren Bereichs der Messmembran abhängige Kapazitätsänderung ΔC1a bzw. ΔC2a klein ist im Vergleich zu der, durch die Summe der Teilkapazitäten gegebenen, gemessenen Kapazität C1 = C1a + C1b bzw. C2 = C2a + C2b. Entsprechend ist die hierdurch erzielbare Messgenauigkeit sehr gering. Darüber hinaus weist die in der Druckmesstechnik regelmäßig zur Ermittlung des Differenzdrucks herangezogene, differentielle Änderung f der beiden Kapazitäten C1, C2, die anhand des Verhältnisses der Differenz C1 - C2 der beiden Kapazitäten zu deren Summe C1 + C2 gemäß: f = (C1-C2)/(C1+C2) bestimmt wird, nicht die gewünschte lineare Abhängigkeit vom zu messenden Differenzdruck auf.

Diese Nachteile sind insb. bei Differenzdrucksensoren mit quadratischer Grundfläche besonders ausgeprägt, da die für die Kapazität C1b, C2b der äußeren Teilkondensatoren maßgebliche Elektrodenfläche bei Messmembranen und Grundkörpern mit entsprechend quadratischer Grundfläche besonders groß ist. Im Waferverbund herstellbare Halbleitersensoren weisen jedoch regelmäßig quadratische Grundflächen auf, da quadratische Grundflächen es ermöglichen, die im Waferverbund hergestellten Differenzdrucksensoren durch Sägen entlang gerader Sägelinien zu vereinzeln.

Dieses Problem wird im Stand der Technik auf die, z.B. in der DE 38 25 138 A1 und in der DE 103 93 943 B3 beschriebene Weise dadurch gelöst, dass zu beiden Seiten der Messmembran Grundkörper eingesetzt werden, die aus drei aufeinander angeordneten Schichten aufgebaut sind. Diese Grundkörper weisen jeweils eine der Messmembran zugewandte und eine von der Messmembran abgewandte leitfähige Schicht auf, die durch eine zwischen den beiden leitfähigen Schichten angeordnete Isolierschicht voneinander getrennt sind. In der der Messmembran zugewandten leitfähigen Schicht ist jeweils mindestens ein bis zur Isolierschicht führender, zu einem Ring geschlossener Graben vorgesehen, durch den die Schicht in einen vom Graben umschlossenen als Elektrode dienenden inneren Bereich und einen den Graben außenseitlich umschließenden mit der Messmembran verbundenen äußeren Bereich unterteilt ist. Dabei ist der innere Bereich derart zu strukturieren, dass er von der Messmembran beabstandet ist.

Die Herstellung derartiger Differenzdrucksensoren ist vergleichsweise aufwendig, da jeder Grundkörper aus mehreren Schichten aufgebaut ist, die jeweils strukturiert werden müssen, und die in den Grundkörpern eingeschlossenen Elektroden durch die äußere Schicht und die Isolierschicht des jeweiligen Grundkörpers hindurch elektrisch kontaktiert werden müssen.

Zur Reduktion der negativen Einflüsse parasitärer Kapazitäten ist in der DE 103 93 943 B3 beschrieben, die in den Grundkörpern integrierten Elektroden gegenüber der Umgebung des Differenzdrucksensors abzuschirmen, indem die Messmembran, die Randbereiche der membranzugewandten Schichten und die membran-abgewandten Schichten über eine auf der Außenseite des Differenzdrucksensors aufgebrachte elektrisch leitfähige Beschichtung geerdet oder an ein Bezugspotential angeschlossen werden. Eine Beschichtung von Außenseiten von im Waferverbund hergestellten Drucksensoren ist jedoch nur nachträglich, nach dem Vereinzeln der Drucksensoren möglich. Das Beschichten jedes einzelnen Drucksensors ist aufwendig und im Vergleich zu kostengünstiger im Waferverbund ausführbaren Prozessen weniger präzise.

Darüber hinaus ist in der US 4,581,676 A ein Drucksensor beschrieben, der zwei jeweils unter Einschluss einer Druckkammer mit einer Messmembran verbundene Grundkörper umfasst. Jeder dieser Grundkörper umfasst jeweils eine membranabgewandte Lage aus Silizium und eine membranzugewandte Lage aus Glas. Auf der Innenseite der membranzugewandten Lage eines der beiden Grundkörper ist eine mittels eines ersten Verfahrens erzeugte Elektrode angeordnet, die durch eine mittels eines zweiten Verfahrens auf eine Innenfläche einer durch den Grundkörper hindurch verlaufenden Ausnehmung aufgebrachte Metallisierung mit einer mittels eines dritten Verfahrens auf einer Außenfläche des Grundkörpers aufgebrachten Anschluss-Beschichtung verbunden ist.

Des Weiteren ist in der GB 2 314 933 A ein Drucksensor mit einem einteiligen unter Einschluss einer Druckkammer mit einer Messmembran verbundenen Grundkörper aus einem Isolator beschrieben. Auf diesen Grundkörper ist ein Gold-Film aufgesputtert, der eine auf der membranzugewandten Seite des Grundkörpers angeordnete Elektrode umfasst und durch eine in der Druckkammer mündende, konische, trapezoide Ausnehmung hindurch bis zu einem auf einer Außenfläche des Grundkörpers angeordneten Anschlussbereich verläuft.

In der US 2008/0087069 A1 sind kapazitive Drucksensoren beschrieben, die eine unter Einschluss einer Druckkammer mit einem Grundkörper verbundene Messmembran aufweisen, deren Druckkammer im Grundkörper eingeschlossen ist.

Es ist eine Aufgabe der vorliegenden Erfindung einen einfach aufgebauten, kostengünstig herstellbaren Drucksensor, sowie ein Verfahren zu dessen Herstellung anzugeben.

Hierzu umfasst die Erfindung einen Drucksensor gemäß Anspruch 1.

Weiter umfasst die Erfindung eine erste Weiterbildung die sich dadurch auszeichnet, dass
- an einem äußeren Rand des Grundkörpers eine Ausnehmung, insb. eine Ausnehmung mit einer Höhe, die einer um die Höhe der Druckkammer verminderten Dicke des Grundkörpers entspricht, vorgesehen ist,
- der Anschlussbereich auf einer senkrecht zur Messmembran verlaufenden Mantelfläche dieser Ausnehmung vorgesehen ist,
- auf der leitfähigen Beschichtung ein Elektrodenanschluss, insb. eine auf der leitfähigen Beschichtung aufgebrachte Metallisierung, vorgesehen ist, der eine im Anschlussbereich angeordnete Kontaktfläche zur Kontaktierung des Elektrodenanschlusses, insb. zur Kontaktierung mittels Draht-Bondens, aufweist.

Eine zweite Weiterbildung der Erfindung sieht vor, dass
- an einem äußeren Rand des Grundkörpers eine einen Randbereich der Messmembran freilegende Ausnehmung vorgesehen ist,
- ein mit dem freiliegenden Randbereich der Messmembran verbundener Membrananschluss, insb. ein durch eine Metallisierung gebildeter Membrananschluss, vorgesehen ist, über den die Messmembran elektrisch anschließbar ist,
- die Ausnehmung eine senkrecht zur Messmembran verlaufende Mantelfläche aufweist und
- der Membrananschluss eine auf dieser Mantelfläche angeordnete Kontaktfläche zur Kontaktierung des Membrananschlusses, insb. zur Kontaktierung mittels Draht-Bondens, aufweist.

Eine Weiterbildung des Drucksensor gemäß der ersten Weiterbildung und der zweiten Weiterbildung sieht vor, dass
- der Drucksensor vier Außenseiten und zwei einander gegenüberliegende Stirnseiten aufweist und
- die Ausnehmung für den Membrananschluss und die Ausnehmung für den Elektrodenanschluss auf der gleichen Außenseite des Drucksensors vorgesehen sind und insb. durch einen dazwischen befindlichen Randbereich des Grundkörpers voneinander getrennt sind.

Eine erste Ausgestaltung der Erfindung sieht vor, dass
- der Grundkörper einen die Druckkammer außenseitlich umschließenden Randbereich aufweist und
- eine der Messmembran zugewandte Oberfläche des Randbereichs mit einem äußeren Rand der Messmembran verbunden ist, insb. unmittelbar oder über eine zwischen der Oberfläche des Randbereichs des Grundkörpers und der Messmembran angeordnete Verbindungsschicht, insb. eine als Teilbereich einer die auf der Innenfläche aufgebrachte Isolationsschicht umfassenden Isolationsschicht ausgebildete Verbindungsschicht, verbunden ist.

Eine zweite Ausgestaltung der Erfindung sieht vor, dass der Grundkörper ein einteiliger Grundkörper ist.

Eine dritte Weiterbildung der Erfindung sieht vor, dass die Isolationsschicht eine Schichtdicke, insb. eine in allen Teilbereichen der Isolationsschicht im Wesentlichen gleiche Schichtdicke, in der Größenordnung von 1 µm bis 5 µm aufweist.

Eine vierte Weiterbildung der Erfindung sieht vor, dass die die Elektrode bildende oder die Elektrode als Teilbereich umfassende leitfähige Beschichtung eine Schichtdicke, insb. eine in allen Teilbereichen im Wesentlichen gleiche Schichtdicke, in der Größenordnung von 50 nm bis 1000 nm, insb. von 150 nm bis 250 nm, aufweist.

Eine Variante der erfindungsgemäßen Drucksensoren zeichnet sich dadurch aus, dass
- auf einer dem Grundkörper gegenüberliegenden Seite der Messmembran ein unter Einschluss einer Druckkammer mit der Messmembran verbundener zweiter Grundkörper, insb. ein identisch ausgebildeter zweiter Grundkörper, vorgesehen ist,
- eine erste Seite der Messmembran über eine in der Druckkammer des Grundkörpers mündende Ausnehmung im Grundkörper mit einem ersten Druck, und eine zweite Seite der Messmembran über eine in der Druckkammer des zweiten Grundkörpers mündende Ausnehmung im zweiten Grundkörper mit einem zweiten Druck beaufschlagbar ist.

Eine Ausgestaltung dieser Variante zeichnet sich dadurch aus, dass
- der zweite Grundkörper mit einer Elektrode und einem damit verbundenen Elektrodenanschluss ausgestattet ist, wobei die auf beiden Grundkörpern vorgesehenen Elektroden und Elektrodenanschlüsse, sowie deren Anordnung und Verbindung insb. identisch ausgebildet sind und/oder
- der zweite Grundkörper mit einem mit der Messmembran verbundenen Membrananschluss ausgestattet ist, wobei die auf beiden Grundkörpern vorgesehenen Membrananschlüsse, sowie deren Anordnung und Verbindung insb. identisch ausgebildet sind.

Weiter umfasst die Erfindung einen Druckmessaufnehmer mit einem Drucksensor gemäß der Variante oder deren Ausgestaltung, der sich dadurch auszeichnet, dass der Drucksensor senkrecht zur Messmembran zwischen zwei Stützkörpern eingespannt ist, die jeweils eine Druckübertragungsleitung umfassen, über die die im daran angrenzenden Grundkörper eingeschlossene Druckkammer im Messbetrieb mit dem jeweiligen Druck beaufschlagbar ist.

Darüber hinaus umfasst die Erfindung ein Verfahren, insb. ein im Waferverbund ausführbares Verfahren, zur Herstellung erfindungsgemäßer Drucksensoren, das sich dadurch auszeichnet, dass
- aus einem Wafer, insb. einem Siliziumwafer, insb. einem p- oder n-dotierten Siliziumwafer, Grundkörper gefertigt werden,
- Isolationsschichten auf die damit zu versehenen Oberflächen der Grundkörper aufgebracht werden, insb. in einem Feuchtoxidationsverfahren, insb. durch Oxidation und anschließende Strukturierung, aufgebracht, werden,
- die Elektroden als Teilbereich umfassende leitfähige Beschichtungen auf die Isolationsschichten aufgebracht werden, insb. durch chemische Gasphasenabscheidung von dotiertem Polysilizium, und Strukturierung aufgebracht werden,
- die Grundkörper im Waferverbund mit einem eine leitfähige Deckschicht aufweisenden Wafer, insb. einem SOI-Wafer derart verbunden werden, insb. durch Silizium-Direkt-Bonden verbunden werden, dass die Deckschicht an den im fertigen Drucksensor der Messmembran zugewandten Stirnseiten der Grundkörper angrenzt, und
- der die Deckschicht aufweisende Wafer bis auf dessen, die Messmembranen bildende Deckschicht entfernt wird.

Eine Weiterbildung des erfindungsgemäßen Verfahrens zur Herstellung erfindungsgemäßer Drucksensoren gemäß der Variante oder deren Ausgestaltung, sieht vor, dass
- aus einem weiteren Wafer, insb. einem Siliziumwafer, insb. einem p- oder n-dotierten Siliziumwafer, zweite Grundkörper gefertigt werden,
- insb. indem Isolationsschichten auf die damit zu versehenen Oberflächen der zweiten Grundkörper aufgebracht werden, insb. in einem Feuchtoxidationsverfahren, insb. durch Oxidation und anschließende Strukturierung, aufgebracht werden, und leitfähige, die Elektroden als Teilbereich umfassende Beschichtungen auf die Isolationsschichten aufgebracht werden, insb. durch chemische Gasphasenabscheidung von dotiertem Polysilizium und Strukturierung aufgebracht werden, und
- der weitere Wafer anschließend mit dem Verbund aus Wafer und Deckschicht derart verbunden wird, dass sich die Druckkammern der Grundkörper und der zweiten Grundkörper zu beiden Seiten der Messmembranen gegenüberliegen.

Eine Weiterbildung des erfindungsgemäßen Verfahrens oder dessen Weiterbildung sieht vor, dass die Herstellung der Grundkörper und/oder der zweiten Grundkörper derart erfolgt, dass
- in einem mit einer einheitlichen Ätztiefe ausgeführten Ätzverfahren, insb. Reaktivem Ionentiefenätzen (DRIE), die Druckkammern bildende Aussparungen und in den Drucksensoren der Messmembran zugewandte Teilbereiche der für die Membrananschlüsse vorzusehenden Ausnehmungen bildende Aussparungen erzeugt werden und
- in einem mit einer einheitlichen Ätztiefe ausgeführten Ätzverfahren, insb. Reaktivem Ionentiefenätzen (DRIE), die in den Druckkammern mündenden Ausnehmungen, die Ausnehmungen für die Elektrodenanschlüsse und die von der Messmembran abgewandten Teilbereiche der Ausnehmungen für die Membrananschlüsse erzeugt werden.

Die erfindungsgemäßen Drucksensoren weisen aufgrund der erfindungsgemäß als Beschichtung ausgebildeten Elektrode den Vorteil auf, dass ohne Einbußen im Hinblick auf die erzielbare Messgenauigkeit einteilige Grundkörper eingesetzt werden können. Ein in der Herstellung deutlich aufwendigerer Aufbau der Grundkörper aus mehreren jeweils zu strukturierenden Schichten ist somit nicht erforderlich.

Da sowohl die die Elektrode umfassende leitfähige Beschichtung, als auch die darunter befindliche Isolationsschicht auf die jeweiligen Oberflächen aufgebrachte Schichten sind, die mittels aus der Halbleitertechnologie bekannten Verfahren auch auf Mantelflächen von vergleichsweise tiefen Ausnehmungen mit geringer Grundfläche und insb. auch auf senkrecht zur Messmembran verlaufenden Mantelflächen mit genau vorgebbarer und innerhalb der jeweiligen Schicht gleichbleibender Schichtdicke erzeugt werden können, kann der elektrische Anschluss der Elektrode durch eine durch den Grundkörper führende Ausnehmung mit höherem Aspektverhältnis erfolgen, die vorzugsweise zugleich auch zur Druckbeaufschlagung der Messmembran genutzt wird. Einteilige Grundkörper mit Ausnehmungen mit höherem Aspektverhältnis bieten den Vorteil einer höheren mechanischen Stabilität.

Indem alle elektrischen Anschlüsse des Drucksensors auf senkrecht zur Messmembran verlaufenden Mantelflächen von am äußeren Rand einer einzigen Außenseite des Sensors angeordneten Ausnehmungen angeordnet sind, können die erfindungsgemäßen Drucksensoren auf sehr effiziente und zuverlässige Weise, insb. mittels Draht-Bonden, an eine elektrische Schaltung, insb. an eine Messelektronik angeschlossen werden.

Die Erfindung und deren Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen.
- Fig. 1 zeigt:: eine Draufsicht auf einen erfindungsgemäßen Drucksensor;
- Fig. 2 zeigt:: eine Schnittzeichnung des Drucksensors von Fig. 1 entlang der in Fig. 1 dargestellten Schnittlinie A-A';
- Fig. 3 zeigt:: eine Ansicht des Drucksensor von Fig. 1;
- Fig. 4 zeigt:: eine Abwandlung des Drucksensor von Fig. 1, bei der die Messmembran mit den Grundkörper jeweils über eine Verbindungsschicht verbunden ist;
- Fig. 5 zeigt:: einen Druckmessaufnehmer; und
- Fig. 6 zeigt:: Verfahrensschritte zur Herstellung eines Drucksensors gemäß Fig. 1 - 3.

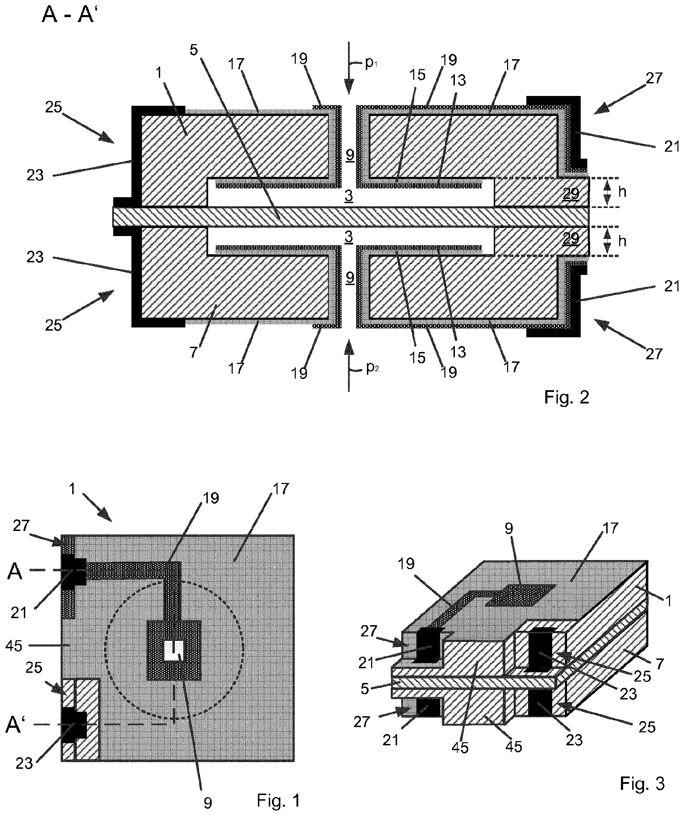

Fig. 1 zeigt eine Draufsicht auf einen erfindungsgemäßen Drucksensor. Fig. 2 zeigt eine Schnittzeichnung dieses Drucksensors entlang der in Fig. 1 eingezeichneten Schnittebene A-A', und Fig. 3 zeigt eine Ansicht dieses Drucksensors.

Der Drucksensor umfasst einen Grundkörper 1 und eine unter Einschluss einer Druckkammer 3 mit dem Grundkörper 1 verbundene Messmembran 5. Der Drucksensor ist in dem dargestellten Ausführungsbeispiel als Differenzdrucksensor ausgebildet und umfasst hierzu auf der dem Grundkörper 1 gegenüberliegenden Seite der Messmembran 5 einen vorzugsweise identisch ausgebildeten zweiten Grundkörper 7, der unter Einschluss einer Druckkammer 3 mit der dem zweiten Grundkörper 7 zugewandten Seite der Messmembran 5 verbunden ist. Die Druckkammern 3 sind scheibenförmige, z. B. kreisscheibenförmige, zur Messmembran 5 hin offene Aussparungen im jeweiligen Grundkörper 1, 7.

Die Messmembran 5 besteht aus einem elektrisch leitfähigen Material, z. B. aus p- oder n-dotiertem Silizium. Zur Dotierung von Silizium eignet sich z.B. Bor, Aluminium oder Phosphor. Vorzugsweise bestehen auch die beiden Grundkörper 1, 7 aus diesem Material.

Die Messmembran 5 ist mit einem zu messenden Druck beaufschlagbar. Bei Differenzdrucksensoren ist der zu messende Druck ein Differenzdruck Δp, der gleich einer Differenz eines auf die erste Seite der Messmembran 5 einwirkenden ersten Drucks p₁ und eines auf die zweite Seite der Messmembran 5 einwirkenden zweiten Drucks p₂ ist. Hierzu weisen die beiden Grundkörper 1, 7 jeweils eine vorzugsweise mittig angeordnete Ausnehmung 9 auf, die durch den jeweiligen Grundkörper 1, 7 hindurch verläuft, in der zugehörigen Druckkammer 3 mündet, und über die die der jeweiligen Ausnehmung 9 zugewandte Seite der Messmembran 5 mit dem ersten bzw. zweiten Druck p₁ bzw. p₂, beaufschlagbar ist.

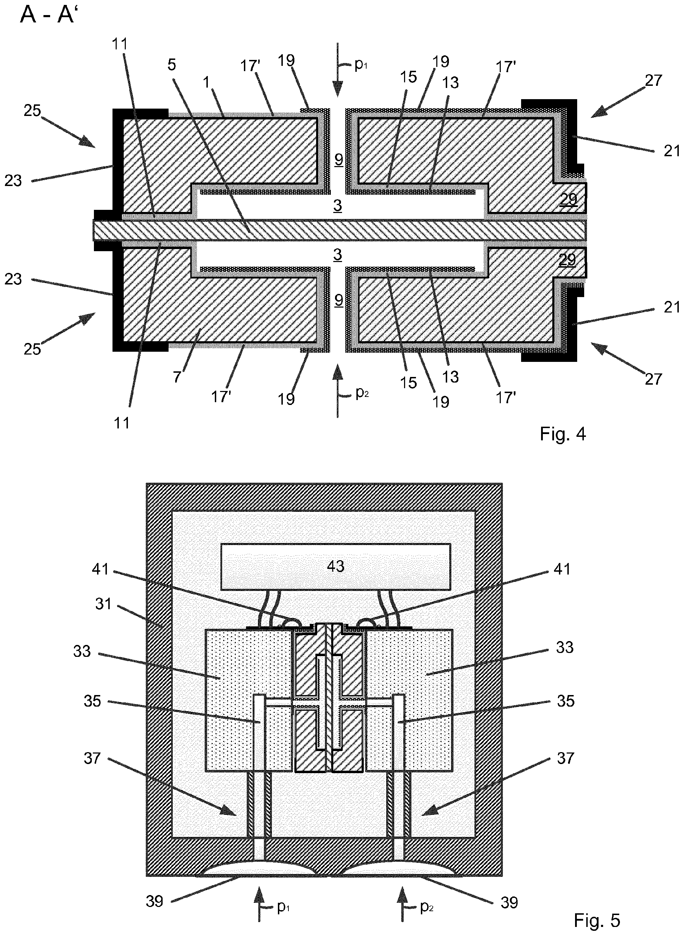

Beide Grundkörper 1,7 weisen jeweils einen die Druckkammer 3 außenseitlich umschließenden äußeren Rand auf, dessen der Messmembran 5 zugewandte Oberfläche mit einem äußeren Rand der dem jeweiligen Grundkörper 1, 7 zugewandten Seite der Messmembran 5 unmittelbar verbunden ist. Alternativ kann zwischen den Oberflächen der Grundkörper 1, 7 und dem damit zu verbindenden Rand der Messmembran 5 jeweils eine Verbindungsschicht 11, z.B. eine Isolationsschicht, z.B. aus Siliziumdioxid (SiO₂) vorgesehen sein. Ein Ausführungsbeispiel hierzu, das abgesehen von den Verbindungsschichten 11 identisch zu dem in den Figuren 1 - 3 dargestellten Ausführungsbeispiel ist, ist in Fig. 4 dargestellt.

Sind Messmembran 5 und Grundkörper 1, 7 jeweils über eine Verbindungsschicht 11 miteinander verbunden, so können Messmembran 5 und Grundkörper 1, 7 aus dem gleichen Material bestehen oder aus verschiedenen Materialien bestehen bzw. verschiedene Dotierungen aufweisen.

Sind Messmembran 5 und Grundkörper 1,7 unmittelbar, also ohne Zwischenfügung einer Verbindungsschicht 11, miteinander verbunden, so bestehen sie vorzugsweise aus dem gleichen Material und weisen die gleiche Dotierung auf. Hierüber wird erreicht, dass Messmembran 5 und Grundkörper 1,7 auf das gleiche elektrische Potential gelegt werden können.

Alternativ können Messmembran 5 und Grundkörper 1,7 auch bei dieser Variante aus verschiedenen Materialien bestehen bzw. verschiedene Dotierungen aufweisen. In dem Fall können Messmembran 5 und Grundkörper 1, 7 über eine elektrisch leitfähige Verbindung, z.B. eine Metallisierung, miteinander verbunden werden, über die sie auf das gleiche Potential gelegt werden können.

Beide Grundkörper 1, 7 weisen jeweils eine die darin eingeschlossene Druckkammer 3 begrenzende, der Messmembran 5 zugewandte, der Messmembran 5 gegenüber liegende, von der Messmembran 5 beabstandete Innenfläche auf, auf der eine Isolationsschicht 15 aufgebracht ist. Auf der Isolationsschicht 15 ist eine als Elektrode 13 dienende leitfähige Beschichtung aufgebracht. Vorzugsweise ist auch auf der Innenfläche des zweiten Grundkörpers 7 eine vorzugsweise identisch ausgebildete Isolationsschicht 15 vorgesehen, auf der eine vorzugsweise ebenfalls identisch ausgebildete Elektrode 13 aufgebracht ist.

Jede der Elektroden 13 bildet zusammen mit der als Gegenelektrode dienenden Messmembran 5 jeweils einen Kondensator mit einer in Abhängigkeit von der vom auf die Messmembran 5 einwirkenden Druck Δp abhängigen Durchbiegung der Messmembran 5 veränderlichen Kapazität.

Die auf den Innenflächen der Grundkörper 1, 7 angeordneten Isolationsschichten 15 sind jeweils als ein Teilbereich einer auf den jeweiligen Grundkörper 1, 7 aufgebrachten Isolationsschicht 17,17' ausgebildet, die sich von der jeweiligen Innenfläche über eine Mantelfläche der Ausnehmung 9 im jeweiligen Grundkörper 1, 7 bis zu einem auf einer Außenfläche des jeweiligen Grundkörpers 1, 7 für einen elektrischen Anschluss der jeweiligen Elektrode 13 vorgesehenen Anschlussbereich erstreckt.

Bei der in Fig. 4 dargestellten Ausführungsform sind vorzugsweise auch die Verbindungsschichten 11 als Teilbereich der jeweiligen Isolationsschicht 17' ausgebildet. Entsprechend erstrecken sich die in Fig. 4 vorgesehenen Isolationsschichten 17' ausgehend von der Innenfläche des jeweiligen Grundkörpers 1, 7 zusätzlich entlang der Innenwände der Druckkammer 3 bis über die jeweilige der Messmembran 5 zugewandte Stirnseite des jeweiligen Grundkörpers 1, 7 hinweg.

Analog bilden die als leitfähige Beschichtungen ausgebildeten Elektroden 13 jeweils einen Teilbereich einer leitfähigen Beschichtung 19, die sich auf der Isolationsschicht 17, 17' von der Innenfläche über die Mantelfläche der Ausnehmung 9 bis zu dem auf der Außenfläche des jeweiligen Grundkörpers 1, 7 vorgesehenen Anschlussbereich erstreckt. Dies bietet den Vorteil, dass für den elektrischen Anschluss der Elektroden 13 weder eine separate Anschlussleitung, noch eine zusätzliche durch den Grundkörper 1, 7 verlaufende Ausnehmung oder Durchführung im jeweiligen Grundkörper 1, 7 vorgesehen werden muss.

Die Isolationsschichten 17, 17' bestehen aus Siliziumdioxid (SiO₂). Zur Erzielung einer ausreichenden elektrischen Isolation ist eine Schichtdicke der Isolationsschichten 15, 17, 17' in der Größenordnung von mehreren Atomlagen bereits ausreichend. Zur Reduktion parasitärer Kapazitäten wird jedoch vorzugsweise eine größere Schichtdicke, insb. eine Schichtdicke in der Größenordnung von 1 µm bis 5 µm vorgesehen.

Die die Elektroden 13 umfassenden leitfähigen Beschichtungen 19 bestehen aus dotiertem Polysilizium. Die Beschichtungen 19 weisen vorzugsweise eine Schichtdicke in der Größenordnung von größer gleich 50 nm und kleiner gleich 1000 nm auf. In einer besonders bevorzugten Ausführungsform weisen sie eine Schichtdicke von größer gleich 150 nm und kleiner 250 nm auf. Die Dotierung kann eine n-Dotierung, z.B. mit Phosphor, Antimon oder Arsen, oder eine p-Dotierung, z.B. mit Bor oder Aluminium, sein.

Auf beiden Grundkörpern 1, 7 ist auf der jeweiligen leitfähigen Beschichtung 19 jeweils ein sich über den Anschlussbereich erstreckender Elektrodenanschluss 21 vorgesehen. Als Elektrodenanschlüsse 21 eignen sich z.B. auf der jeweiligen Beschichtung 19 aufgebrachte Metallisierungen, z.B. aus Aluminium, auf denen eine vorzugsweise planare Kontaktfläche vorgesehen ist, auf der die Kontaktierung z.B. mittels Drahtbondens erfolgen kann.

Zusätzlich ist mindestens ein Membrananschluss 23 vorgesehen, über den die Messmembran 5 elektrisch anschließbar ist. Grundsätzlich genügt auch bei Differenzdrucksensoren ein einziger Membrananschluss 23. Differenzdrucksensoren können alternativ aber auch mit zwei - vorzugsweise identisch ausgebildeten - Membrananschlüssen 23 ausgestattet werden. Hierfür ist an einem äußeren Rand mindestens eines der beiden Grundkörper 1, 7 eine einen Randbereich der Messmembran 5 freilegende Ausnehmung 25 vorgesehen. Als Membrananschlüsse 23 eignen sich Metallisierungen, z.B. aus Aluminium, die auf den durch die jeweilige Ausnehmung 25 frei liegenden Randbereich der Messmembran 5 aufgebracht werden, und sich von der Messmembran 5 über eine Mantelfläche der Ausnehmung 25 bis zu einem auf einer äußeren Mantelfläche des jeweiligen Grundkörpers 1, 7 für den Anschluss der Messmembran 5 vorgesehenen Anschlussbereich erstrecken. Auch auf den Membrananschlüssen 23 ist im jeweiligen Anschlussbereich jeweils eine vorzugsweise planare Kontaktfläche vorgesehen, auf der die Kontaktierung z.B. mittels Drahtbondens erfolgen kann.

Die durch jeweils eine der erfindungsgemäßen Elektroden 13 und die Messmembran 5 gebildeten Kondensatoren verhalten sich im Hinblick auf den druckabhängig veränderlichen Anteil von deren Kapazitäten genauso, wie die Kondensatoren der eingangs beschriebenen Drucksensoren mit mehrlagigen Grundkörpern, bei denen ein innerer, durch einen bis zur Isolierschicht geführten Graben abgetrennter Bereich einer membranzugewandten Schicht des jeweiligen Grundkörpers als Elektrode dient.

Dabei bieten auf beiden Grundkörpern 1, 7 vorgesehene Membrananschlüsse 23 den Vorteil, dass beide Grundkörper 1, 7 über den jeweils darüber verlaufenden Membrananschluss 23 elektrisch leitend mit der Messmembran 5 verbunden sind und somit auf dem gleichen Potential liegen, wie die Messmembran 5. Sofern nur ein Membrananschluss 23 vorgesehen ist, wird der diesem gegenüber liegende Grundkörper 1, 7 vorzugsweise ebenfalls an dieses Potential angeschlossen. Die beiden Membrananschlüsse 23 werden vorzugsweise an ein Bezugspotential angeschlossen oder geerdet. Alternativ können sie an eine hier nicht dargestellte elektrische Schaltung angeschlossen werden, die die Messmembran 5 und beide Grundkörper 1, 7 auf einem Masse- oder Bezugspotential der Schaltung hält. Die Membrananschlüsse 23 erfüllen somit zugleich die Funktion der in der eingangs erwähnten DE 103 93 943 B3 beschriebenen, dort nachträglich auf die Außenseiten des Drucksensors aufgebrachten Beschichtung. Sie bewirken eine Abschirmung der Elektroden 13 gegenüber der Umgebung des Drucksensors und ermöglichen es, die Potentialverhältnisse in der unmittelbaren Umgebung der Elektroden 13 im Inneren des Drucksensors stabil zu halten.

Die Kontaktierung der Elektrodenanschlüsse 21 und der Membrananschlüsse 23 kann z.B. durch Drahtbonden, Löten oder durch Kontaktieren mit Leitklebstoffen erfolgen. Sowohl das Drahtbonden als auch das Löten stellen gewisse Mindestanforderungen an die Zugänglichkeit und die Orientierung der Kontaktflächen.

Hierzu ist in der noch unveröffentlichten Deutschen Patentanmeldung der Anmelderin vom 30.10.2014 mit dem Aktenzeichen 10 2014 115803.2 ein Differenzdrucksensor beschrieben, bei dem eine zuverlässige Kontaktierung von dessen Membran- und Elektrodenanschlüssen, dadurch erreicht wird, dass die Kontaktflächen der Anschlüsse auf seitlichen Außenflächen des Sensors vorgesehen werden, die im Wesentlichen senkrecht zur Messmembran verlaufen. Diese Lösung wird vorzugsweise auch bei den hier beschriebenen Drucksensoren vorgesehen.

Hierzu sind die Ausnehmungen 25 am Rand der Grundkörper 1, 7 vorzugsweise im Wesentlichen quaderförmig, oder weisen zumindest jeweils eine senkrecht zur Messmembran 5 verlaufende Mantelfläche auf, auf der die Kontaktfläche des jeweiligen Membrananschlusses 23 vorgesehen wird.

Zusätzlich wird auch für die Elektrodenanschlüsse 21 am äußeren Rand des jeweiligen Grundkörpers 1, 7 jeweils eine vorzugsweise im Wesentlichen quaderförmige Ausnehmung 27 vorgesehen, die jeweils eine senkrecht zur Messmembran 5 verlaufende Mantelfläche aufweist, auf der die Kontaktfläche des jeweiligen Elektrodenanschlusses 21 vorgesehen wird. Im Unterschied zu den für die Membrananschlüsse 23 vorgesehenen Ausnehmungen 25 erstrecken sich diese Ausnehmungen 27 jedoch nicht bis zur Messmembran 5, sondern enden innerhalb des jeweiligen Grundkörpers 1, 7, so dass zwischen Ausnehmung 27 und Messmembran 5 jeweils ein Randsegment 29 des jeweiligen Grundkörpers 1, 7 verbleibt. Dabei erstrecken sich die Isolationsschichten 17, 17' und die darauf aufgebrachten leitfähigen Beschichtungen 19 jeweils über die senkrecht zur Messmembran 5 verlaufende Mantelfläche der jeweiligen Ausnehmung 27 und die von der Messmembran 5 abgewandte Oberfläche des jeweiligen Randsegments 29.

Bei Drucksensoren mit quadratischer oder rechteckförmiger Grundfläche, die entsprechend vier Außenseiten und zwei zu beiden Seiten der Messmembran 5 einander gegenüber liegende Stirnflächen aufweisen, werden die Membran- und Elektrodenanschlüsse 21, 23 vorzugsweise alle auf der gleichen Außenseite des Drucksensors vorgesehen. Das bietet den Vorteil, dass für sie kein Platz auf den beiden Stirnflächen freigehalten werden muss, und der Drucksensor ohne Zusatzvorkehrungen senkrecht zur Messmembran 5 eingespannt werden kann.

Fig. 5 zeigt hierzu ein Ausführungsbeispiel eines Druckmessaufnehmers, in dem ein erfindungsgemäßer Differenzdrucksensor in einem Messaufnehmergehäuse 31 senkrecht zur Messmembran 5 zwischen zwei Stützkörpern 33 eingespannt ist. Jeder Stützkörper 33 ist mit einer Druckübertragungsleitung 35 ausgestattet, deren eines Ende über die Ausnehmung 9 im jeweiligen Grundkörper 1, 7 mit der darin eingeschlossenen Druckkammer 3 verbunden ist, und dessen anderes Ende jeweils mit einem vorgeschalteten Druckmittler 37 verbunden ist. Die Druckmittler 37 weisen jeweils eine nach außen durch eine Trennmembran 39 abgeschlossene Druckempfangskammer auf, und sind genau wie die Druckübertragungsleitungen 35, die Ausnehmungen 9 und die Druckkammern 3 mit einer Druck übertragenden Flüssigkeit befüllt, die den von außen auf die jeweilige Trennmembran 37 einwirkenden Druck p₁, p₂ auf die jeweilige Seite der Messmembran 5 überträgt. Die Membrananschlüsse 23 und die Elektrodenanschlüsse 21 befinden sich vorzugsweise auf der den Druckmittlern 37 gegenüberliegenden Außenseite des Drucksensors, und sind jeweils über eine Drahtbondung 41 an einen auf dem daran angrenzenden Stützkörper 33 vorgesehenen Anschluss angeschlossen. Die Anschlüsse sind z.B. Anschlüsse einer auf dem jeweiligen Stützkörper 33 vorgesehenen Leiterplatte oder einer Vorortelektronik, die wiederum an eine Messelektronik 43 angeschlossen sein kann.

Die Erfindung kann völlig analog in Verbindung mit Abwandlungen der Ausgestaltungen der hier dargestellten Drucksensoren eingesetzt werden. Beispiele hierfür sind Differenzdrucksensoren, bei denen nur einer der beiden Grundkörper 1, 7 mit einer Elektrode 13 und/oder einem Membrananschluss 23 ausgestattet ist.

Ein weiteres Beispiel sind Relativdrucksensoren, die sich von den beschriebenen Differenzdrucksensoren dadurch unterscheiden, dass der zweite Grundkörper 7 entfällt, und die Außenseite der Messmembran 5 mit dem zu messenden Druck p beaufschlagt, während an deren Innenseite ein der Druckkammer 3 über die Ausnehmung 9 im Grundkörper 1 zugeführter Referenzdruck p_{ref} anliegt.

Grundsätzlich ist es auch möglich erfindungsgemäße Drucksensoren mit einem Grundkörper 1 und einer Messmembran 5 als Absolutdrucksensoren auszubilden. Diese können aus den vorgenannten Relativdrucksensoren dadurch erzeugt werden, dass die im Grundkörper 1 eingeschlossene Druckkammer 3 durch einen unter Vakuum in die Ausnehmung 9 eingebrachten Verschluss aus einem elektrischen Isolator verschlossen wird.

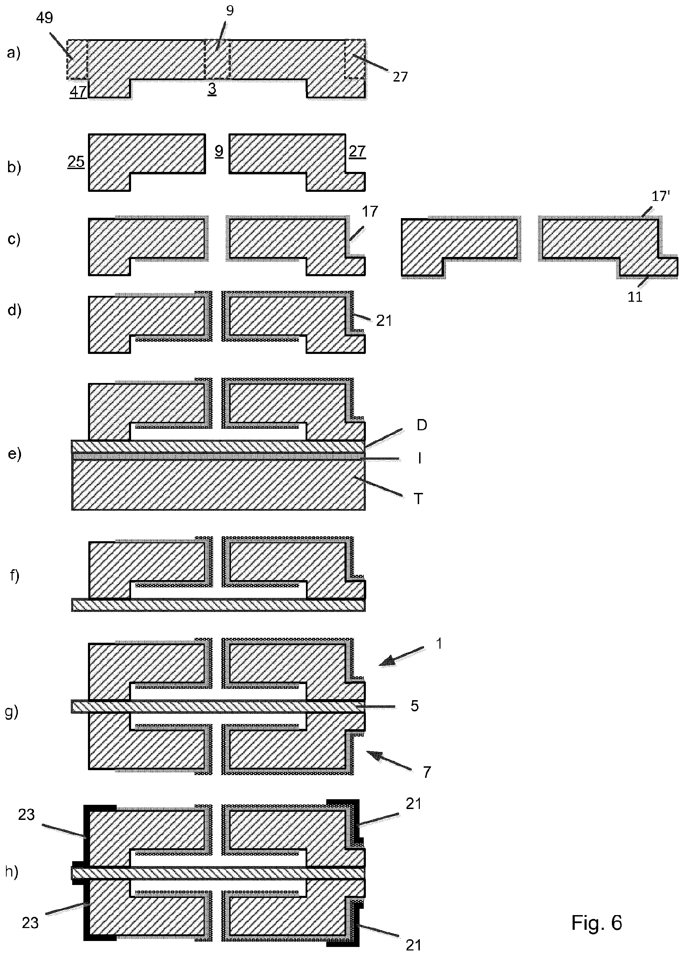

Die erfindungsgemäßen Drucksensoren sind auf einfache und kostengünstige Weise im Waferverbund herstellbar. Fig. 6 zeigt hierzu die dabei in den Verfahrensschritten a) -h) erzeugten Zwischenprodukte in der in Fig. 1 angezeigten Schnittebene A-A'.

Dabei werden die Grundkörper 1 aus einem einfachen, einlagigen Wafer, z.B. einem p- oder n-dotierten Siliziumwafer, hergestellt, in dem die die Druckkammern 3 bildenden Aussparungen, die in den Druckkammern 3 mündenden Ausnehmungen 9 und die Ausnehmungen 25, 27 für die Membran- und die Elektrodenanschlüsse 21, 23 der Drucksensoren erzeugt werden. Hierzu werden die entsprechenden Bereiche des Wafers z.B. durch Ätzverfahren, z.B. das Reaktive Ionentiefenätzen (DRIE), entfernt. Dabei werden die Grundkörper 1 im Wafer vorzugsweise paarweise derart angeordnet, dass die Ausnehmungen 25 für die Membrananschlüsse 23 der Grundkörper 1 eines Paares derart unmittelbar aneinander angrenzen, dass sie zusammen eine quaderförmige Ausnehmung mit entsprechend doppelt so großer Grundfläche bilden, und die Ausnehmungen 27 für die Elektrodenanschlüsse 21 eines Paares derart unmittelbar aneinander angrenzen, dass sie zusammen eine quaderförmige Ausnehmung mit entsprechend doppelt so großer Grundfläche bilden. Dabei verbleibt am Rand des jeweiligen einzelnen Grundkörpers 1 zwischen den an dessen Rand erzeugten Ausnehmungen 25, 27 jeweils ein Randbereich 45 des jeweiligen Grundkörpers 1, der die Ausnehmungen 25, 27 voneinander trennt. Die Randbereiche 45 bewirken, dass die einzelnen Grundkörper 1 auch nach der Erzeugung der Ausnehmungen 25, 27 im Wafer miteinander verbunden bleiben, so dass das Herstellungsverfahren im Waferverbund fortgesetzt werden kann.

Die Herstellung der Grundkörper 1 erfolgt vorzugsweise in einem von einer ersten Seite und einem anschließend von der gegenüberliegenden zweiten Seite des Wafers her pro Seite jeweils mit einer einheitlichen Ätztiefe ausgeführten Ätzverfahren. Hierzu werden die Ausnehmungen 27 für die Elektrodenanschlüsse 21 derart dimensioniert, dass sie jeweils eine Höhe aufweisen, die gleich der um die Höhe h der Druckkammern 3 verminderten Dicke der Grundkörper 1 sind. Zusätzlich werden die Ausnehmungen 25 für die Membrananschlüsse 23 jeweils in zwei Teilbereiche 47, 49 unterteilt, von denen einer in der Ebene der Druckkammern 3 liegt und die gleiche Höhe h aufweist, wie diese, und der andere die Ausnehmung 25 vervollständigt.

Auf diese Weise können in Verfahrensschritt a) von der in Fig. 6 die Unterseite des Wafers bildenden Seite her in einem einzigen mit einheitlicher Ätztiefe ausgeführten Ätzvorgang die die Druckkammern 3 bildenden Aussparungen und die, die gleich Höhe h aufweisenden, unterseitigen Teilbereiche 47 der Ausnehmung 25 für die Membrananschlüsse 23 erzeugt werden.

Anschließend werden in Verfahrensschritt b) von der in Fig. 6 die Oberseite des Wafers bildenden Seite her in einem einzigen mit einheitlicher Ätztiefe ausgeführten Ätzvorgang die Ausnehmungen 9 für die Druckzufuhr, die Ausnehmungen 27 für die Elektrodenanschlüsse 23 und die zweiten Teilbereiche 49 der Ausnehmungen 25 für die Membrananschlüsse 23 erzeugt. Die hierbei zu entfernenden Bereiche sind in Verfahrensschritt a) als mit einer gestrichelten Umrandung versehene Waferbereiche hervorgehoben.

Im nachfolgenden Verfahrensschritt c) werden die Isolationsschichten 17, 17' aufgebracht. Hierzu kann zum Beispiel ein Feuchtoxidationsverfahren eingesetzt werden, mit dem durch Oxidation und anschließende Strukturierung eine Siliziumoxidschicht auf den entsprechenden Oberflächen erzeugt wird. Bei der Herstellung von Drucksensoren gemäß Fig. 4 werden in diesem Verfahrensschritt zugleich auch die Verbindungsschichten 11 erzeugt. Diese Abwandlung ist in der rechten Abbildung zu Verfahrensschritt c) dargestellt.

Nachfolgend werden in Verfahrensschritt d) die leitfähigen Beschichtungen 19 auf die einzelnen Grundkörper 1 aufgebracht. Das Aufbringen von leitfähigen Beschichtungen 19 aus dotiertem Polysilizium erfolgt z.B. durch eine bei niedrigem Druck ausgeführte Abscheidung aus der Gasphase (LP-CVD). Im Unterschied zu in Sputterverfahren aufgebrachten Metallisierungen, deren Schichtdicke insb. in schwer zugänglichen Bereichen variieren kann, können die Isolationsschichten 17, 17' und die leitfähigen Beschichtungen 19 auf die oben beschriebene Weise auch auf Mantelflächen von Ausnehmungen mit hohem Aspektverhältnis mit in allen Teilbereichen im Wesentlichen gleicher Schichtdicke erzeugt werden. Das gilt insb. für Ausnehmungen mit im Drucksensor senkrecht zur Messmembran 5 verlaufenden Mantelflächen.

Dies bietet den Vorteil, dass die für den elektrischen Anschluss der Elektroden 13 und vorzugsweise zugleich zur Druckbeaufschlagung genutzten Ausnehmungen 9 tiefer sein können und/oder eine geringere Grundfläche aufweisen können, als bei herkömmlichen Drucksensoren.

Dabei sind Ausnehmungen 9 mit einem Aspektverhältnis in der Größenordnung von 10 bis 25 realisierbar, was bei Ausnehmungen 9 mit quadratischer Grundfläche einem Verhältnis der Tiefe der Ausnehmung 9 zur Seitenlänge der Grundfläche in dieser Größenordnung entspricht.

So können Grundkörper 1, 7 mit einer Dicke in Größenordnung von 300 µm bis 500 µm beispielsweise Ausnehmungen 9 mit einer quadratischen Grundfläche mit einer Seitenlänge von größer gleich 20 µm aufweisen. Die Seitenlängen liegen z.B. im Bereich von 20 µm bis 100 µm, wobei sie vorzugsweise im Bereich von 20 µm bis 30 µm liegen. Aspektverhältnisse in der o.g. Größenordnung sind natürlich völlig analog auch in Verbindung mit Ausnehmungen 9 mit kreisförmiger Grundfläche realisierbar.

Einteilige Grundkörper 1, 7, insb. einteilige Grundkörper 1,7 mit Ausnehmungen 9 mit größerer Tiefe und/oder kleinerer Grundfläche bewirken eine Erhöhung der mechanischen Stabilität der Drucksensoren. Bei Differenzdrucksensoren wird hierdurch eine Verbesserung der Überlastfestigkeit der Drucksensoren, insb. gegenüber einseitig auf die Messmembran 5 einwirkenden Überlasten, sowie eine verbesserte Widerstandsfähigkeit der Drucksensoren gegenüber einem dem zu messenden Differenzdruck Δp überlagerten Systemdruck erzielt. Der Systemdruck bezeichnet den auf beide Seiten der Messmembran 5 gleichermaßen einwirkenden Druck, dem die zu messende Druckdifferenz Δp überlagert ist. Der Systemdruck entspricht dem niedrigeren der beiden auf die Messmembran 5 einwirkenden Drücke p₁, p₂.
Darüber hinaus wirken Ausnehmungen 9 mit großer Tiefe und kleiner Grundfläche im Hinblick auf die durch sie hindurch erfolgende Druckübertragung als Drossel und erhöhen somit die Überlastfestigkeit des Drucksensors gegenüber dynamischen Überlasten.

Nachfolgend wird in Verfahrensschritt e) ein eine leitfähige Deckschicht D aufweisender Wafer, insb. eine Trägerschicht T, eine darauf angeordnete Isolationsschicht I und eine auf der Isolationsschicht I angeordnete leitfähige Deckschicht D aufweisender SOI-Wafer, mit dem gemäß den Verfahrensschritten a)-d) bearbeiteten Wafer derart, z.B. durch Silizium-Direkt-Bonden, verbunden, dass dessen die Messmembranen 5 der Drucksensoren bildende Deckschicht D die im ersten Wafer erzeugten Druckkammern 3 verschließt. Bei der Herstellung der in Fig. 4 dargestellten Drucksensoren, kann die entsprechende Verbindung ebenfalls durch Bonden bewirkt werden, wobei die Bondverbindung über die Verbindungsschicht 11 erfolgt.

Anschließend werden in Verfahrensschritt f) die Trägerschicht T und die Isolationsschicht I des SOI-Wafers entfernt. Zum Entfernen der Trägerschicht T eignen sich Ätzverfahren, wie z.B. das Reaktive Ionentiefenätzen (DRIE). Zum Entfernen der Isolationsschicht I eignen sich zum Beispiel Trockenätzverfahren, wie z.B. das Reaktive lonenätzen (RIE).

Parallel zur Herstellung der Grundkörper 1 oder im Anschluss daran werden aus einem weiteren Wafer anhand der Verfahrensschritte a) bis d) zweite Grundkörper 7 gefertigt und mit den Isolationsschichten 17, 17' und den leitfähigen Beschichtungen 19 versehen. Sofern nur einer der beiden Grundkörper 1, 7 mit einem Membrananschluss 23 und/oder einer Elektrode 13 ausgestattet werden soll, entfallen die entsprechenden Verfahrensschritte bzw. werden entsprechend abgewandelt.

Anschließend wird der auf diese Weise bearbeitete weitere Wafer in Verfahrensschritt g) mit dem Verbund aus der die Messmembranen 5 bildenden Deckschicht D und dem ersten Wafer derart verbunden, dass sich die Druckkammern 3 der ersten und zweiten Grundkörper 1, 7 jeweils gegenüber liegen. Auch diese Verbindung wird z.B. durch Bonden, z.B. durch Silizium-Direkt-Bonden, erzeugt.

Im Anschluss werden in Verfahrensschritt h) die Elektrodenanschlüsse 21 und die Membrananschlüsse 23 erzeugt, indem auf den entsprechenden, die Ausnehmungen 25, 27 begrenzenden Mantelflächen eine metallische Beschichtung aufgebracht, z.B. aufgesputtert, wird.

Abschließend werden die auf diese Weise hergestellten Differenzdrucksensoren durch Sägen entlang der Außenseiten der einzelnen Differenzdrucksensoren vereinzelt.
- 1: Grundkörper
- 3: Druckkammer
- 5: Messmembran
- 7: zweiter Grundkörper
- 9: Ausnehmung
- 11: Verbindungsschicht
- 13: Elektrode
- 15: Isolationsschicht
- 17: Isolationsschicht
- 17': Isolationsschicht
- 19: leitfähige Schicht
- 21: Elektrodenanschluss
- 23: Membrananschluss
- 25: Ausnehmung
- 27: Ausnehmung
- 29: Randsegment
- 31: Messaufnehmergehäuse
- 33: Stützkörper
- 35: Druckübertragungsleitung
- 37: Druckmittler
- 39: Trennmembran
- 41: Drahtbondung
- 43: Messelektronik
- 45: Randbereich
- 47: Teilbereich der Ausnehmung 25
- 49: Teilbereich der Ausnehmung 25

## Patentansprüche

1. Drucksensor, mit
- einem Grundkörper (1),
- einer unter Einschluss einer Druckkammer (3) mit dem Grundkörper (1) verbundenen, mit einem zu messenden Druck (Δp) beaufschlagbaren, elektrisch leitfähigen Messmembran (5), und
- einer von der Messmembran (5) beabstandeten, gegenüber der Messmembran (5) elektrisch isolierten Elektrode (13), die zusammen mit der Messmembran (5) einen Kondensator mit einer in Abhängigkeit von einer vom auf die Messmembran (5) einwirkenden Druck (Δp) abhängigen Durchbiegung der Messmembran (5) veränderlichen Kapazität bildet,
- wobei der Grundkörper (1) eine die Druckkammer (3) begrenzende, der Messmembran (5) gegenüber liegende Innenfläche aufweist, und
- wobei der Grundkörper (1) eine Ausnehmung (9) aufweist, die durch den Grundkörper (1) hindurch verläuft und in der Druckkammer (3) mündet,
**dadurch gekennzeichnet, dass**
- der Grundkörper (1) aus einem elektrisch leitfähigen Material besteht,
- die Ausnehmung (9) ein Aspektverhältnis von 10 bis 25 aufweist,
- auf der Innenfläche eine Isolationsschicht (15) aus Silizimdioxid (SiO₂) aufgebracht ist, wobei die Isolationsschicht (15) ein Teilbereich einer auf den Grundkörper (1) aufgebrachten Isolationsschicht (17, 17') ist, die sich von der Innenfläche über eine Mantelfläche der Ausnehmung (9) bis zu einem auf einer Außenfläche des Grundkörpers (1) vorgesehenen Anschlussbereich erstreckt, und
- die Elektrode (13) eine auf der Innenfläche auf die Isolationsschicht (15) aufgebrachte leitfähige Beschichtung aus dotiertem Polysilizium ist, wobei die Elektrode (13) ein Teilbereich einer leitfähigen Beschichtung (19) ist, die sich auf der Isolationsschicht (17, 17') von der Innenfläche über die Mantelfläche der Ausnehmung (9) bis zu dem auf der Außenfläche des Grundkörpers (1) vorgesehenen Anschlussbereich erstreckt.

2. Drucksensor gemäß Anspruch 1, **dadurch gekennzeichnet, dass**
- an einem äußeren Rand des Grundkörpers (1) eine Ausnehmung (27), insb. eine Ausnehmung (27) mit einer Höhe, die einer um die Höhe (h) der Druckkammer (3) verminderten Dicke des Grundkörpers (1) entspricht, vorgesehen ist,
- der Anschlussbereich auf einer senkrecht zur Messmembran (5) verlaufenden Mantelfläche dieser Ausnehmung (27) vorgesehen ist,
- auf der leitfähigen Beschichtung (19) ein Elektrodenanschluss (21), insb. eine auf der leitfähigen Beschichtung (19) aufgebrachte Metallisierung, vorgesehen ist, der eine im Anschlussbereich angeordnete Kontaktfläche zur Kontaktierung des Elektrodenanschlusses (21), insb. zur Kontaktierung mittels Draht-Bondens, aufweist.

3. Drucksensor gemäß Anspruch 1 bis 2, **dadurch gekennzeichnet, dass**
- an einem äußeren Rand des Grundkörpers (1) eine einen Randbereich der Messmembran (5) freilegende Ausnehmung (25) vorgesehen ist,
- ein mit dem freiliegenden Randbereich der Messmembran (5) verbundener Membrananschluss (23), insb. ein durch eine Metallisierung gebildeter Membrananschluss (23), vorgesehen ist, über den die Messmembran (23) elektrisch anschließbar ist,
- die Ausnehmung (25) eine senkrecht zur Messmembran (5) verlaufende Mantelfläche aufweist und
- der Membrananschluss (23) eine auf dieser Mantelfläche angeordnete Kontaktfläche zur Kontaktierung des Membrananschlusses (23), insb. zur Kontaktierung mittels Draht-Bondens, aufweist.

4. Drucksensor gemäß Anspruch 2 und 3, **dadurch gekennzeichnet, dass**
- der Drucksensor vier Außenseiten und zwei einander gegenüberliegende Stirnseiten aufweist und
- die Ausnehmung (25) für den Membrananschluss (23) und die Ausnehmung (27) für den Elektrodenanschluss (21) auf der gleichen Außenseite des Drucksensors vorgesehen sind und insb. durch einen dazwischen befindlichen Randbereich (45) des Grundkörpers (1) voneinander getrennt sind.

5. Drucksensor nach Anspruch 1 bis 4, **dadurch gekennzeichnet, dass**
- der Grundkörper (1) einen die Druckkammer (3) außenseitlich umschließenden Randbereich aufweist und
- eine der Messmembran (5) zugewandte Oberfläche des Randbereichs mit einem äußeren Rand der Messmembran (5) verbunden ist, insb. unmittelbar oder über eine zwischen der Oberfläche des Randbereichs des Grundkörpers (1) und der Messmembran (5) angeordnete Verbindungsschicht (11), insb. eine als Teilbereich einer die auf der Innenfläche aufgebrachte Isolationsschicht (15) umfassenden Isolationsschicht (17') ausgebildete Verbindungsschicht (11), verbunden ist.

6. Drucksensor nach Anspruch 1 bis 5, **dadurch gekennzeichnet, dass** der Grundkörper (1) ein einteiliger Grundkörper (1) ist.

7. Drucksensor nach Anspruch 1 bis 6, **dadurch gekennzeichnet, dass** die Isolationsschicht (15, 17, 17') eine Schichtdicke, insb. eine in allen Teilbereichen der Isolationsschicht (17, 17') im Wesentlichen gleiche Schichtdicke, in der Größenordnung von 1 µm bis 5 µm aufweist.

8. Drucksensor nach Anspruch 1 bis 7, **dadurch gekennzeichnet, dass** die die Elektrode (13) als Teilbereich umfassende leitfähige Beschichtung (15, 19) eine Schichtdicke, insb. eine in allen Teilbereichen im Wesentlichen gleiche Schichtdicke, in der Größenordnung von 50 nm bis 1000 nm, insb. von 150 nm bis 250 nm, aufweist.

9. Drucksensor gemäß Anspruch 1 bis 8, **dadurch gekennzeichnet, dass**
- auf einer dem Grundkörper (1) gegenüberliegenden Seite der Messmembran (5) ein unter Einschluss einer Druckkammer (3) mit der Messmembran (5) verbundener zweiter Grundkörper (7), insb. ein identisch ausgebildeter zweiter Grundkörper (7), vorgesehen ist,
- eine erste Seite der Messmembran (5) über eine in der Druckkammer (3) des Grundkörpers (1) mündende Ausnehmung (9) im Grundkörper (1) mit einem ersten Druck (p₁), und eine zweite Seite der Messmembran (5) über eine in der Druckkammer (3) des zweiten Grundkörpers (7) mündende Ausnehmung (9) im zweiten Grundkörper (7) mit einem zweiten Druck (p₂) beaufschlagbar ist.

10. Drucksensor gemäß Anspruch 9, **dadurch gekennzeichnet, dass**
- der zweite Grundkörper (7) mit einer Elektrode (13) und einen damit verbundenen Elektrodenanschluss (21) ausgestattet ist, wobei die auf beiden Grundkörpern (1,7) vorgesehenen Elektroden (13) und Elektrodenanschlüsse (21), sowie deren Anordnung und Verbindung insb. identisch ausgebildet sind, und/oder
- der zweite Grundkörper (7) mit einem mit der Messmembran (5) verbundenen Membrananschluss (23) ausgestattet ist, wobei die auf beiden Grundkörpern (1,7) vorgesehenen Membrananschlüsse (23), sowie deren Anordnung und Verbindung insb. identisch ausgebildet sind.

11. Druckmessaufnehmer mit einem Drucksensor gemäß Anspruch 9 oder 10, **dadurch gekennzeichnet, dass** der Drucksensor senkrecht zur Messmembran (5) zwischen zwei Stützkörpern (33) eingespannt ist, die jeweils eine Druckübertragungsleitung (35) umfassen, über die die im daran angrenzenden Grundkörper (1, 7) eingeschlossene Druckkammer (3) im Messbetrieb mit dem jeweiligen Druck (p₁, p₂) beaufschlagbar ist.

12. Verfahren, insb. im Waferverbund ausführbares Verfahren, zur Herstellung von Drucksensoren gemäß Anspruch 1 bis 10 oder von Druckmessaufnehmern gemäß Anspruch 11, **dadurch gekennzeichnet, dass**
- aus einem Wafer, insb. einem Siliziumwafer, insb. einem p- oder n-dotierten Siliziumwafer, Grundkörper (1) gefertigt werden,
- Isolationsschichten (15, 17, 17') auf die damit zu versehenen Oberflächen der Grundkörper (1) aufgebracht werden, insb. in einem Feuchtoxidationsverfahren, insb. durch Oxidation und anschließende Strukturierung, aufgebracht, werden,
- die Elektroden (13) als Teilbereich umfassende leitfähige Beschichtungen (19) auf die Isolationsschichten (15, 17, 17') aufgebracht werden, insb. durch chemische Gasphasenabscheidung von dotiertem Polysilizium und Strukturierung aufgebracht werden,
- die Grundkörper (1) im Waferverbund mit einem eine leitfähige Deckschicht (D) aufweisenden Wafer, insb. einem SOI-Wafer derart verbunden werden, insb. durch Silizium-Direkt-Bonden verbunden werden, dass die Deckschicht (D) an den im fertigen Drucksensor der Messmembran (5) zugewandten Stirnseiten der Grundkörper (1) angrenzt, und
- der die Deckschicht (D) aufweisende Wafer bis auf dessen, die Messmembranen (5) bildende Deckschicht (D) entfernt wird.

13. Verfahren gemäß Anspruch 12 zur Herstellung von Drucksensoren gemäß Anspruch 9 oder 10, **dadurch gekennzeichnet, dass**
- aus einem weiteren Wafer, insb. einem Siliziumwafer, insb. einem p- oder n-dotierten Siliziumwafer, zweite Grundkörper (7) gefertigt werden,
- insb. indem Isolationsschichten (15, 17, 17') auf die damit zu versehenen Oberflächen der zweiten Grundkörper (7) aufgebracht werden, insb. in einem Feuchtoxidationsverfahren, insb. durch Oxidation und anschließende Strukturierung, aufgebracht werden, und leitfähige, die Elektroden (13) als Teilbereich umfassende Beschichtungen (19) auf die Isolationsschichten (15, 17, 17') aufgebracht werden, insb. durch chemische Gasphasenabscheidung von dotiertem Polysilizium und Strukturierung aufgebracht werden, und
- der weitere Wafer anschließend mit dem Verbund aus Wafer und Deckschicht (D) derart verbunden wird, dass sich die Druckkammern (3) der Grundkörper (1) und der zweiten Grundkörper (7) zu beiden Seiten der Messmembranen (5) gegenüberliegen.

14. Verfahren gemäß Anspruch 12 oder 13, **dadurch gekennzeichnet, dass** die Herstellung der Grundkörper (1) und/oder der zweiten Grundkörper (7) derart erfolgt, dass
- in einem mit einer einheitlichen Ätztiefe ausgeführten Ätzverfahren, insb. Reaktivem Ionentiefenätzen (DRIE), die Druckkammern (3) bildende Aussparungen und in den Drucksensoren der Messmembran (5) zugewandte Teilbereiche (47) der für die Membrananschlüsse (23) vorzusehenden Ausnehmungen (25) bildende Aussparungen erzeugt werden und
- in einem mit einer einheitlichen Ätztiefe ausgeführten Ätzverfahren, insb. Reaktivem Ionentiefenätzen (DRIE), die in den Druckkammern (3) mündenden Ausnehmungen (9), die Ausnehmungen (27) für die Elektrodenanschlüsse (21) und die von der Messmembran (5) abgewandten Teilbereiche (49) der Ausnehmungen (25) für die Membrananschlüsse (23) erzeugt werden.

## Claims

1. Pressure sensor, with
- a meter body (1),
- an electrically conductive measuring diaphragm (5) which encloses a pressure chamber (3), wherein said diaphragm is connected to the meter body (1) and can be exposed to a pressure to be measured (Δp), and
- an electrode (13) which is arranged at a distance from the measuring diaphragm (5) and is electrically isolated in relation to the measuring diaphragm (5), said electrode forming, together with the measuring diaphragm (5), a capacitor with a variable capacity which depends on a deflection of the measuring diaphragm (5) that depends on a pressure (Δp) acting on the measuring diaphragm (5),
- wherein the meter body (1) has an interior surface which is opposite the measuring diaphragm (5) and delimits the pressure chamber (3), and
- wherein the meter body (1) has a recess (9) that runs through the meter body (1) and enters into the pressure chamber (3),
**characterized in that**
- the meter body (1) is made from an electrically conductive material,
- the recess (9) has an aspect ratio of 10 to 25,
- an insulating layer (15) of silicon dioxide (SiO₂) is applied on the interior surface, wherein the insulating layer (15) is a subsection of an insulating layer (17, 17') applied on the meter body (1), which extends from the interior surface via a lateral surface of the recess (9) as far as a connection area provided on an exterior surface of the meter body (1), and
- the electrode (13) is a conductive layer consisting of doped polysilicon and applied on the insulating layer (15) on the interior surface, wherein the electrode (13) is a subsection of a conductive layer (19), said layer extending on the insulating layer (17, 17') from the interior surface via the lateral surface of the recess (9) as far as the connection area provided on the exterior surface of the meter body (1).

2. Pressure sensor as claimed in Claim 1, **characterized in that**
- a recess (27) is provided on an outer edge of the meter body (1), particularly a recess (27) with a height corresponding to a thickness of the meter body (1) reduced by the height (h) of the pressure chamber (3),
- the connection area is provided on a lateral surface of said recess (27), said surface being perpendicular to the measuring diaphragm (5),
- an electrode connection (21) is provided on the conductive layer, particularly a metallization applied on the conductive layer (19), said connection presenting a contact surface arranged in the connection area, designed for the purpose of contacting the electrode connection (21), particularly for the purpose of contacting via wire bonding.

3. Pressure sensor as claimed in Claim 1 to 2, **characterized in that**
- a recess (25), which exposes a marginal area of the measuring diaphragm (5), is provided on an outer edge of the meter body (1),
- a diaphragm connection (23) which is connected to the exposed marginal area of the measuring diaphragm (5), particularly a diaphragm connection (23) formed by a metallization, is provided via which the measuring diaphragm (23) can be connected electrically,
- the recess (25) presents a lateral surface perpendicular to the measuring diaphragm (5), and
- the diaphragm connection (23) has a contact surface arranged on said lateral surface for the purpose of contacting the diaphragm connection (23), particularly for the purpose of contacting via wire bonding.

4. Pressure sensor as claimed in Claim 2 and 3, **characterized in that**
- the pressure sensor has four exterior faces and two front faces that are opposite one another, and
- the recess (25) for the diaphragm connection (23) and the recess (27) for the electrode connection (21) are provided on the same exterior face of the pressure sensor, and wherein said recesses are particularly separated from one another by a marginal area (45) of the meter body (1) located between the recesses.

5. Pressure sensor as claimed in Claim 1 to 4, **characterized in that**
- the meter body (1) has a marginal area surrounding the pressure chamber (3) on the outside, and
- a surface of the marginal area facing towards the measuring diaphragm (5) is connected to an outer edge of the measuring diaphragm (5), particularly directly or via a connecting layer (11) arranged between the surface of the marginal area of the meter body (1) and the measuring diaphragm (5), particularly a connecting layer (11) formed as a subsection of an insulating layer (17') comprising the insulating layer (15) applied on the interior surface.

6. Pressure sensor as claimed in Claim 1 to 5, **characterized in that** the meter body (1) is a meter body (1) in one piece.

7. Pressure sensor as claimed in Claim 1 to 6, **characterized in that** the insulating layer (15, 17, 17') has a thickness, particularly a thickness that is essentially the same in all subsections of the insulating layer (17, 17'), in a range from 1 to 5 µm.

8. Pressure sensor as claimed in Claim 1 to 7, **characterized in that** the conductive layer (15, 19) comprising the electrode (13) as a subsection has a layer thickness, particularly a layer thickness that is essentially the same in all subsections in a range from 50 nm to 1000 nm, particularly from 150 nm to 250 nm.

9. Pressure sensor as claimed in Claim 1 to 8, **characterized in that**
- a second meter body (7), particularly a second meter body (7) of an identical design, is provided on a side of the measuring diaphragm (5) that is opposite the meter body (1), said second meter body being connected to the measuring diaphragm (5) and enclosing a pressure chamber (3),
- a first pressure (p1) can be applied to a first side of the measuring diaphragm (5) via a recess (9) in the meter body (1) that enters into the pressure chamber (3) of the meter body (1), and a second pressure (p2) can be applied to a second side of the measuring diaphragm (5) via a recess (9) in the second meter body (7) that enters into the pressure chamber (3) of the second meter body (7).

10. Pressure sensor as claimed in Claim 9, **characterized in that**
- the second meter body (7) is equipped with an electrode (13) and an electrode connection (21) connected to said electrode, wherein the electrodes (13) and electrode connections (21) provided on the two meter bodies (1, 7), as well as their arrangement and connection, are particularly implemented in an identical manner, and/or
- the second meter body (7) is equipped with a diaphragm connection (23) connected to the measuring diaphragm (5), wherein the diaphragm connections (23) provided on the two meter bodies (1, 7), as well as their arrangement and connection, are particularly implemented in an identical manner.

11. Pressure transmitter with a pressure sensor as claimed in Claim 9 or 10, **characterized in that** the pressure sensor is clamped at right angles to the measuring diaphragm (5) between two support bodies (33), which each comprise a pressure transmission line (35) via which the pressure chamber (3) enclosed in the adjacent meter body (1, 7) can be exposed to the respective pressure (p1, p2) during measuring operation.

12. Procedure, particularly a procedure that can be implemented in the wafer composite, for the production of pressure sensors as claimed in Claim 1 to 10 or of pressure transmitters as claimed in Claim 11, **characterized in that**
- meter bodies (1) are made from a wafer, particularly a p-doped or n-doped silicon wafer,
- insulation layers (15, 17, 17') are applied on the surfaces of the meter bodies (1) to be provided with the layers, particularly in a wet oxidation procedure, particularly by oxidation followed by structuring,
- conductive layers (19), comprising the electrodes (13) as a subsection, are applied on the insulation layers (15, 17, 17'), particularly via the chemical vapor deposition of doped polysilicon and structuring,
- the meter bodies (1) in the wafer composite are connected with a wafer featuring a conductive cover layer (D), particularly a SOI wafer, particularly by means of silicon direct bonding, in such a way that the cover layer (D) borders on the front faces of the meter bodies (1) facing towards the measuring diaphragm (5) in the finished pressure sensor, and
- the wafer featuring the cover layer (D) is removed with the exception of the cover layer (D) forming the measuring diaphragms (5).

13. Procedure as claimed in Claim 12 designed for the production of pressure sensors as claimed in Claim 9 or 10, **characterized in that**
- second meter bodies (7) are produced from an additional wafer, particularly a silicon wafer, particularly a p-doped or no-doped silicon wafer,
- particularly **in that** insulation layers (15, 17, 17') are applied on the surfaces of the second meter bodies (7) to be provided with said layers, particularly in a wet oxidation procedure, particularly by oxidation followed by structuring, and conductive layers (19), comprising the electrodes (13) as a subsection, are applied on the insulation layers (15, 17, 17'), particularly via the chemical vapor deposition of doped polysilicon and structuring, and
- the other wafer is then connected to the composite comprising the wafer and cover layer (D) in such a way that the pressure chambers (3) of the meter bodies (1) and of the second meter bodies (7) are opposite one another on both sides of the measuring diaphragms (5).

14. Procedure as claimed in Claim 12 or 13, **characterized in that** the production of the meter bodies (1) and/or of the second meter bodies (7) is performed in such a way that
- the recesses forming the pressure chambers (3) and subsections (47) of the cavities forming the recesses (25) to be provided for the diaphragm connections (23) in the pressure sensors, said subsections facing towards the measuring diaphragm (5), are implemented in an etching process performed at a standardized etching depth, particularly deep reactive-ion etching (DRIE), and
- the recesses (9) entering into the pressure chambers (3), the recesses (27) for the electrode connections (21) and the subsections of the recesses (25) for the diaphragm connections (23), said subsections (49) facing away from the measuring diaphragm (5), are generated in an etching process performed at a standardized etching depth, particularly deep reactive-ion etching (DRIE).

## Revendications

1. Capteur de pression, avec
- un corps de base (1),
- une membrane de mesure (5) électriquement conductrice, laquelle membrane enferme une chambre de pression (3), laquelle membrane est reliée avec le corps de base (1) et laquelle membrane peut être soumise à une pression à mesurer (Δp), et
- une électrode (13) électriquement isolée, disposée à distance de la membrane de mesure (5) et faisant face à la membrane de mesure (5), laquelle électrode forme, en liaison avec la membrane de mesure (5), un condensateur avec une capacité variable en fonction d'une déformation de la membrane de mesure (5) dépendant d'une pression (Δp) agissant sur la membrane de mesure (5),
- le corps de base (1) présentant une surface intérieure faisant face à la membrane de mesure (5) et délimitant la chambre de pression (3), et
- le corps de base (1) présentant une cavité (9) traversant le corps de base (1) et débouchant dans la chambre de pression (3),
**caractérisé en ce que**
- que le corps de base (1) est constitué d'un matériau électriquement conducteur,
- que la cavité (9) présente un rapport de forme de 10 à 25,
- qu'une une couche d'isolation (15) en oxyde de silicium (SiO₂) est appliquée sur la surface intérieure, la couche d'isolation (15) étant une zone partielle d'une couche d'isolation (17, 17') appliquée sur le corps de base (1), laquelle zone s'étend de la surface intérieure via une surface latérale de la cavité (9) jusqu'à une zone de raccordement prévue sur une surface extérieure du corps de base (1), et
- que l'électrode (13) est un revêtement conducteur constitué de polysilicium dopé et appliqué sur la surface intérieure sur la couche d'isolation (15), l'électrode (13) étant une zone partielle d'un revêtement conducteur (19), lequel revêtement s'étend sur la couche d'isolation (17, 17') de la surface intérieure via la surface latérale de la cavité (9) jusqu'à la zone de raccordement prévue sur une surface extérieure du corps de base (1).

2. Capteur de pression selon la revendication 1, **caractérisé en ce**
- **qu'**est prévue, sur le bord extérieur du corps de base (1), une cavité (27), notamment une cavité (27) avec une hauteur correspondant à une épaisseur du corps de base (1) diminuée de la hauteur (h) de la chambre de pression (3),
- **que** la zone de raccordement est prévue sur une surface latérale de cette cavité (27), laquelle surface est perpendiculaire à la membrane de mesure (5),
- **qu'**est prévue, sur le revêtement conducteur (19), une connexion d'électrode (21), notamment une métallisation appliquée sur le revêtement conducteur (19), laquelle connexion présente, dans la zone de raccordement, une surface de contact destinée à la mise en contact de la connexion d'électrode (21), notamment pour la mise en contact au moyen d'un soudage de fil.

3. Capteur de pression selon la revendication 1 à 2, **caractérisé en ce**
- **qu'**est prévue, sur un bord extérieur du corps de base (1), une cavité (25) mettant à nu une zone marginale de la membrane de mesure (5),
- **qu'**est prévue une connexion de membrane (23) reliée avec la zone marginale mise à nu de la membrane de mesure (5), notamment une connexion de membrane (23) formée par une métallisation, connexion par l'intermédiaire de laquelle la membrane de mesure (23) peut être raccordée électriquement,
- **que** la cavité (25) présente une surface latérale perpendiculaire à la membrane de mesure (5), et
- **que** la connexion de membrane (23) présente une surface de contact disposée sur cette surface latérale, laquelle surface est destinée à la mise en contact au moyen d'un soudage de fil.

4. Capteur de pression selon la revendication 2 et 3, **caractérisé en ce**
- **que** le capteur de pression présente quatre faces extérieures et deux faces frontales opposées, et
- **que** sont prévues la cavité (25) pour la connexion de membrane (23) et la cavité (27) pour la connexion d'électrode (21) sur la même face extérieure du capteur de pression, et lesquelles cavités sont notamment séparées l'une de l'autre par une zone marginale (45) du corps de base (1), interposée entre les cavités.

5. Capteur de pression selon la revendication 1 à 4, **caractérisé en ce**
- **que** le corps de base (1) présente une zone marginale entourant à l'extérieur la chambre de pression (3), et
- **qu'**une surface de la zone marginale orientée vers la membrane de mesure (5) est reliée avec un bord extérieur de la membrane de mesure (5), notamment à proximité immédiate ou sur une couche de liaison (11) disposée entre la surface de la zone marginale du corps de base (1) et la membrane de mesure (5), notamment une couche de liaison (11) formée en tant que zone partielle d'une couche d'isolation (17') entourant la couche d'isolation (15) appliquée sur la surface intérieure.

6. Capteur de pression selon la revendication 1 à 5, **caractérisé en ce que** le corps de base (1) est un corps de base (1) en une pièce.

7. Capteur de pression selon la revendication 1 à 6, **caractérisé en ce que** la couche d'isolation (15, 17, 17') présente une épaisseur, notamment une épaisseur qui est sensiblement la même dans toutes les zones partielles de la couche d'isolation (17, 17'), de l'ordre de 1 à 5 µm.

8. Capteur de pression selon la revendication 1 à 7, **caractérisé en ce que** le revêtement conducteur (15, 19) comprenant l'électrode (13) comme zone partielle présente une épaisseur de couche, notamment une épaisseur de couche qui est sensiblement la même dans toutes les zones partielles, de l'ordre de 50 nm à 1 000 nm, notamment de 150 nm à 250 nm.

9. Capteur de pression selon la revendication 1 à 8, **caractérisé en ce**
- **qu'**est prévu, sur un côté de la membrane de mesure (5) opposé au corps de base (1), un deuxième corps de base (7), notamment un deuxième corps de base (7) de conception identique, qui est relié à la membrane de mesure (5) et qui enferme une chambre de pression (3),
- **qu'**un premier côté de la membrane de mesure (5) peut être soumis à une première pression (p1) par l'intermédiaire d'une cavité (9) dans le corps de base (1) qui débouche dans la chambre de pression (3) du corps de base (1), et un deuxième côté de la membrane de mesure (5) peut être soumis à une deuxième pression (p2) par l'intermédiaire d'une cavité (9) dans le deuxième corps de base (7) qui débouche dans la chambre de pression (3) du deuxième corps de base (7).

10. Capteur de pression selon la revendication 9, **caractérisé en ce que**
- le deuxième corps de base (7) est pourvu d'une électrode (13) et d'une connexion d'électrode (21) reliée à celle-ci, les électrodes (13) et les connexions d'électrode (21) prévues sur les deux corps de base (1, 7), ainsi que leur disposition et leur liaison, étant notamment réalisées de manière identique, et/ou
- le deuxième corps de base (7) est pourvu d'une connexion de membrane (23) reliée à la membrane de mesure (5), les connexions de membrane (23) prévues sur les deux corps de base (1, 7), ainsi que leur disposition et leur liaison, étant notamment conçues de manière identique.

11. Transmetteur de pression avec un capteur de pression selon la revendication 9 ou 10, **caractérisé en ce que** le capteur de pression est serré perpendiculairement à la membrane de mesure (5) entre deux corps de support (33), qui présentent chacun une conduite de transmission de pression (35), par laquelle la chambre de pression (3) enfermée dans le corps de base (1, 7) adjacent peut être soumise à la pression respective (p1, p2) en mode de mesure.

12. Procédé, notamment un procédé pouvant être réalisé dans une plaquette composite, destiné à la fabrication de capteurs de pression selon les revendications 1 à 10 ou de transmetteurs de pression selon la revendication 11, **caractérisé en ce que**
- des corps de base (1) sont fabriqués à partir d'une plaquette, notamment d'une plaquette de silicium, notamment une plaquette de silicium dopé p ou n,
- des couches d'isolation (15, 17, 17') sont appliquées sur les surfaces des corps de base (1) à munir, notamment selon un procédé d'oxydation humide, notamment par oxydation suivie d'une structuration,
- les revêtements conducteurs (19) comprenant les électrodes (13) en tant que zone partielle sont appliqués sur les couches d'isolation (15, 17, 17'), notamment par dépôt chimique en phase vapeur de polysilicium dopé et structuration,
- les corps de base (1) sont reliés dans une plaquette composite avec une plaquette présentant une couche de recouvrement (D) conductrice, notamment une plaquette SOI, notamment par collage direct au silicium, de telle sorte que la couche de recouvrement (D) se raccorde aux faces frontales des corps de base (1) tournées vers la membrane de mesure (5) dans le capteur de pression fini, et
- la plaquette ayant la couche de recouvrement (D) est enlevée, à l'exception de sa couche de recouvrement (D) formant les membranes de mesure (5).

13. Procédé selon la revendication 12 destiné à la fabrication de capteurs de pression selon la revendication 9 ou 10, **caractérisé en ce que**
- des seconds corps de base (7) sont fabriqués à partir d'une autre plaquette, notamment d'une plaquette de silicium, notamment d'une plaquette de silicium dopé p ou n,
- notamment **en ce que** des couches d'isolation (15, 17, 17') sont appliquées sur les surfaces des seconds corps de base (7) à munir de celles-ci, notamment selon un procédé d'oxydation humide, notamment par oxydation suivie d'une structuration, et **en ce que** des revêtements conducteurs (19) comprenant les électrodes (13) en tant que zone partielle sont appliqués sur les couches d'isolation (15, 17, 17'), notamment par dépôt chimique en phase vapeur de polysilicium dopé et structuration, et
- l'autre plaquette est ensuite reliée au composite plaquette/couche de recouvrement (D) de telle manière que les chambres de pression (3) des corps de base (1) et des seconds corps de base (7) se font face des deux côtés des membranes de mesure (5).

14. Procédé selon la revendication 12 ou 13, **caractérisé en ce que** la fabrication des corps de base (1) et/ou des seconds corps de base (7) est réalisée de telle sorte que
- sont réalisés, dans un processus de gravure effectué avec une profondeur de gravure uniforme, notamment une gravure en profondeur par ions réactifs (DRIE), des évidements formant les chambres de pression (3) et des évidements formant dans des zones partielles (47) des évidements (25) à prévoir pour les connexions de membrane (23) dans les capteurs de pression, lesquelles zones sont tournées vers la membrane de mesure (5), et
- sont réalisés, dans un procédé de gravure effectué avec une profondeur de gravure uniforme, notamment une gravure en profondeur par ions réactifs (DRIE), les cavités (9) débouchant dans les chambres de pression (3), les cavités (27) pour les connexions d'électrodes (21) et les zones partielles (49) des cavités (25) éloignées de la membrane de mesure (5) pour les connexions de membrane (23).
